# EUROPEAN PATENT SPECIFICATION

(11) **EP 3 677 779 B1**
(45) Date of publication and mention of the grant of the patent: **06.09.2023**
(21) Application number: 18850865.9
(22) Date of filing: 11.06.2018
(51) Int. Cl.: F04C 2/10, F04C 15/00, F04C 11/00

(54) **ELECTRIC OIL PUMP**
ELEKTRISCHE ÖLPUMPE
POMPE À HUILE ÉLECTRIQUE

(30) Priority: 31.08.2017 CN 201710769833
(43) Date of publication of application: 08.07.2020
(73) Proprietor: Zhejiang Sanhua Intelligent Controls Co., Ltd., Shaoxing, Zhejiang 312500 (CN)
(72) Inventor: LU, Jiangang, Zhejiang 310018 (CN); WU, Zhiwang, Zhejiang 310018 (CN); YIN, Bingjiu, Zhejiang 310018 (CN); ZHANG, Kai, Zhejiang 310018 (CN); ZHOU, Yubin, Zhejiang 310018 (CN)
(74) Representative: Epping - Hermann - Fischer
(86) International application number: PCT/CN2018/090551
(87) International publication number: WO 2019/041959

(56) References cited:
- CN-A- 105 179 232
- CN-U- 203 883 614
- CN-U- 204 068 455
- CN-U- 205 955 993
- CN-U- 207 363 873
- CN-U- 207 363 874
- CN-U- 207 420 851
- CN-U- 207 701 348
- JP-A- 2004 353 537
- JP-A- 2012 026 294
- JP-A- 2016 023 616
- US-A1- 2013 189 134
- US-A1- 2014 079 578

## Description

The present application claims the priority to Chinese Patent Application No. 201710769833.8, titled "ELECTRIC OIL PUMP", filed with the National Intellectual Property Administration on August 31, 2017.

### FIELD

The present application relates to the field of vehicles, and in particular to components of a vehicle lubrication system and/or a vehicle cooling system.

### BACKGROUND

The automobile industry is developing rapidly. With the automobile performance developing toward safer, more reliable, more stable, fully automated, intelligent and environment-friendly and energy saving, electric oil pumps are widely used in vehicle thermal management systems, and can well meet the market requirements.

The electric oil pump mainly provides power for the vehicle lubrication system and/or the vehicle cooling system. How to design the structure of the electric oil pump to improve the structure and the performance of the electric oil pump is an urgent technical problem to be solved. Document US 2013/189134 A1 discloses a metal pump housing including a shaft support hole for supporting a middle part of a rotary shaft. The rotary shaft includes a first end on which a pump operating portion is provided and a second end on which a motor rotor is provided. A metal motor case is fixed to a part of the pump housing that is at a side of the second end. The motor case accommodates a motor section including a motor stator and a motor rotor. A plastic circuit case member is fixed to a part of the motor case that is opposite to the part to which the pump housing is fixed. A circuit substrate for controlling the motor section is fixed to the circuit case member and is separate from the motor case. Document US 2014/079578 A1 discloses an electric pump including a motor rotor provided in a first end region in the axial direction of a rotary shaft, a pump rotor provided in a second end region in the axial direction of the rotary shaft, and a pump housing supporting the rotary shaft. The pump housing has a first housing portion for accommodating the pump rotor and a second housing portion having a blocking portion. The first housing portion has a suction port for drawing in fluid and a discharge port for discharging the drawn-in fluid. Document JP 2012026294 A1 discloses a fluid pump including a rotator provided at one side of a rotating shaft, a pump rotor provided at the other side of the rotating shaft and rotatable synchronously with the rotator, and a housing containing the rotating shaft, the rotator and the pump rotor. An engagement hole and an engagement shaft for changing the extending direction of the rotating shaft with respect to the pump rotor are formed separately on the pump rotor and the rotating shaft.

### SUMMARY

An object of the present application is to provide an electric oil pump.

In order to achieve the above object, the following technical solution is provided according to the present application.

The electric oil pump includes a pump housing, a first rotor assembly, a pump shaft, a second rotor assembly, a stator assembly and a circuit board assembly. The pump housing at least includes a first housing, a second housing and a third housing. The electric oil pump has a pump inner chamber, the pump inner chamber includes a first inner chamber and a second inner chamber, a sidewall forming the first inner chamber includes part of the first housing and part of the second housing, and a sidewall forming the second inner chamber includes part of the second housing and part of the third housing. The first rotor assembly is accommodated in the first inner chamber. The second rotor assembly, the stator assembly and the circuit board assembly are accommodated in the second inner chamber. The electric oil pump includes a partition portion, the partition portion is located between the first housing and the third housing, and the first inner chamber and the second inner chamber are located on two sides of the partition portion. The first inner chamber and the second inner chamber are separated by the partition portion; or the electric oil pump further includes a sealing portion, and the first inner chamber and the second inner chamber are separated by the partition portion and the sealing portion. The present invention is further defined by the features of appended independent claim 1. Further embodiments are shown in the attached dependent claims 2-14. Since a working medium in the first inner chamber of the electric oil pump is not in communication with a working medium in the second inner chamber, the working medium in the first inner chamber cannot enter the second inner chamber. Thus, the second inner chamber does not need to be additionally provided with other structures to prevent the components in the second inner chamber from corrosion, and the electric oil pump has better sealing performance and a simpler structure, which helps to reduce costs.

### BRIEF DESCRIPTION OF THE DRAWINGS

Figure 1 is a schematic perspective view of a first embodiment of an electric oil pump according to the present application;
Figure 2a is a schematic sectional view of the electric oil pump shown in Figure 1 taken along one direction;
Figure 2b is a schematic sectional view of a second embodiment of the electric oil pump according to the present application;
Figure 2c is a schematic sectional view of a third embodiment of the electric oil pump according to the present application;
Figure 2d is a schematic sectional view of a fourth embodiment of the electric oil pump according to the present application;
Figure 3 is a schematic sectional view of the electric oil pump shown in Figure 1 taken along another direction;
Figure 4 is a schematic front view of the electric oil pump shown in Figure 1;
Figure 5 is a schematic front view of the electric oil pump that is not assembled with the first housing shown in Figure 1;
Figure 6 is a schematic perspective view of a first embodiment of the first housing shown in Figure 1 viewed from one direction;
Figure 7 is a schematic perspective view of the first embodiment of the first housing shown in Figure 1 viewed from another direction;
Figure 8 is a schematic front view of the first housing shown in Figure 6 viewed from one direction;
Figure 9 is a schematic front view of the first housing shown in Figure 6 viewed from another direction;
Figure 10 is a schematic sectional view of the first housing shown in Figure 6 taken along one direction;
Figure 11 is a schematic sectional view of the first housing shown in Figure 6 taken along another direction;
Figure 12 is a schematic sectional view of another embodiment of the first housing shown in Figure 1;
Figure 13 is a schematic perspective view of a first embodiment of the second housing shown in Figure 1 or Figure 2a viewed from one direction;
Figure 14 is a schematic perspective view of the first embodiment of the second housing shown in Figure 1 or Figure 2a viewed from another direction;
Figure 15 is a schematic sectional view of the second housing shown in Figure 13;
Figure 16 is a partially enlarged schematic view of portion B of the second housing shown in Figure 15;
Figure 17 is a schematic sectional view of a fifth embodiment of the electric oil pump according to the present application;
Figure 18 is a schematic sectional view of the second housing shown in Figure 17;
Figure 19 is a schematic sectional view of a sixth embodiment of the electric oil pump according to the present application;
Figure 20 is a schematic perspective view of the third housing shown in Figure 1 viewed from one direction;
Figure 21 is a schematic front view of the third housing shown in Figure 19;
Figure 22 is a schematic perspective view of the third housing shown in Figure 1 viewed from another direction;
Figure 23 is another schematic front view of the third housing shown in Figure 19;
Figure 24 is a schematic sectional view of the third housing shown in Figure 19;
Figure 25 is a schematic perspective view of the partition plate shown in Figure 2a to Figure 3 viewed from one direction;
Figure 26 is a schematic perspective view of the partition plate shown in Figure 2a to Figure 3 viewed from another direction;
Figure 27 is a schematic front view of the partition plate shown in Figure 25 or Figure 26;
Figure 28 is a schematic sectional view of the partition plate shown in Figure 25 or Figure 26;
Figure 29 is a schematic perspective view of a combination of a mounting bracket and a capacitor shown in Figure 2a to Figure 3;
Figure 30 is a schematic front view of the combination of the mounting bracket and the capacitor shown in Figure 29;
Figure 31 is a schematic perspective view of the mounting bracket shown in Figure 2a to Figure 3;
Figure 32 is a schematic front view of the mounting bracket shown in Figure 31; and
Figure 33 is a partially enlarged schematic view of portion C of the mounting bracket shown in Figure 31.

### DETAILED DESCRIPTION OF THE EMBODIMENTS

The present application is further illustrated hereinafter in conjunction with drawings and specific embodiments.

An electric oil pump can be applied in a vehicle lubrication system and/or a vehicle cooling system to provide circulating power for the working medium in the vehicle lubrication system and/or the vehicle cooling system, and the vehicle lubrication system and/or the vehicle cooling system can provide lubricating oil and/or cooling oil for a transmission system.

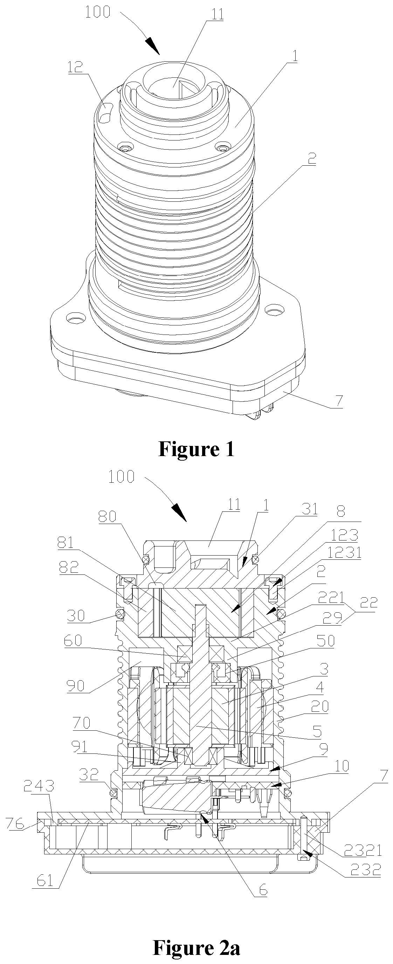

Referring to Figure 1, Figure 2a and Figure 3, an electric oil pump 100 includes a pump housing, a second rotor assembly 3, a stator assembly 4, a pump shaft 5, a first rotor assembly 8 and a circuit board assembly 6. The first rotor assembly 8, the second rotor assembly 3 and the circuit board assembly 6 are arranged along an axial direction of the electric oil pump 100, so that the axial arrangement of the electric oil pump 100 can be more compact. Specifically, the second rotor assembly 3 is arranged between the first rotor assembly 8 and the circuit board assembly 6. The electric oil pump has a pump inner chamber. The second rotor assembly 3, the stator assembly 4, the pump shaft 5, the first rotor assembly 8 and the circuit board assembly 6 are accommodated in the pump inner chamber. When the electric oil pump 100 is in operation, the circuit board assembly 6 controls the stator assembly 4 to generate a varying excitation magnetic field by controlling a current passing through the stator assembly 4 to change according to a certain rule, the second rotor assembly 3 rotates under the action of the excitation magnetic field, and the second rotor assembly 3 drives the first rotor assembly 8 to rotate by the pump shaft 5. When the first rotor assembly 8 rotates, the working medium is extruded out of a second flow port, thereby generating the power for flowing.

The pump housing at least includes a first housing, a second housing and a third housing. Specifically, referring to Figure 2a, in the present embodiment, the pump housing includes a first housing 1, a second housing 2 and a third housing 7. The electric oil pump can form a pump inner chamber, and in the present embodiment, the pump inner chamber includes a first inner chamber 80 and a second inner chamber 90. The working medium can flow through the first inner chamber 80, and the first rotor assembly 8 is arranged in the first inner chamber 80. No working medium flows through the second inner chamber 90. The stator assembly 4, the second rotor assembly 3 and the circuit board assembly 6 are arranged in the second inner chamber 90. A sidewall forming the first inner chamber 80 includes part of the first housing 1 and part of the second housing 20, and a sidewall forming the second inner chamber 90 includes part of the second housing 20 and part of the third housing 7. Referring to Figure 2a, the electric oil pump 100 includes a partition portion 22. The first inner chamber 80 and the second inner chamber 90 are located on two sides of the partition portion 22, respectively. The electric oil pump 100 further includes a sealing portion 50. The first inner chamber 80 is separated from the second inner chamber 90 by the partition portion 22 and the sealing portion 50, so that the working medium in the first inner chamber 80 is not in communication with the working medium in the second inner chamber 90 through the separation by the partition portion 22 and the sealing portion 50. Such an arrangement completely separates the stator assembly 4 and the circuit board assembly 6 from the working medium, thereby ensuring that the performance of the stator assembly and the circuit board assembly is not affected by the working medium. Structures of the sealing portion 50 and the partition portion 22 are described in detail hereinafter.

Referring to Figure 1, Figure 2a and Figure 3, the first rotor assembly 8 is close to one end of the pump shaft 5, the first rotor assembly 8 is connected with part of the pump shaft 5, the second rotor assembly 3 is close to the other end of the pump shaft 5, and the second rotor assembly 3 is connected with part of the pump shaft 5, so that the second rotor assembly 3 can drive the first rotor assembly 8 to rotate by the pump shaft 5. The circuit board assembly 6 is close to one end of the pump shaft 5 mounted with the second rotor assembly 3. One end of the pump shaft 5 extends into the first inner chamber 80, and the other end of the pump shaft 5 extends into the second inner chamber 90. Specifically, one end of the pump shaft 5 close to the first rotor assembly 8 extends into the first inner chamber 80, and the other end of the pump shaft 5 close to the second rotor assembly 3 extends into the second inner chamber 90.

The electric oil pump includes the partition portion. The first inner chamber and the second inner chamber are located on two sides of the partition portion, respectively. The partition portion is located between the first housing and the second housing. The first rotor assembly and the second rotor assembly are arranged on two sides of the partition portion, and the first inner chamber is separated from the second inner chamber through the partition portion. Four embodiments about the arrangement of the partition portion are described below.

Referring to Figure 1 and Figure 2a, Figure 1 and Figure 2a are schematic structural views of a first embodiment of the electric oil pump. The structure of the first embodiment of the electric oil pump is described below.

Referring to Figure 1 and Figure 2a, in the present embodiment, the pump housing includes the first housing 1, the second housing 2 and the third housing 7. The second housing 2 is closer to the second rotor assembly 3 than the first housing 1, the first housing 1 is detachably connected with the second housing 2, and the second housing 2 is detachably connected with the third housing 7, which facilitates the inspection and maintenance for the components arranged in the chamber compared with non-detachable housing connection. For example, if the connection between the first housing 1 and the second housing 2 is opened, an operation status of the first rotor assembly 8 can be inspected, and the first rotor assembly 8 can be replaced as needed; and if the connection between the second housing 2 and the third housing 7 is opened, an operation status of the circuit board assembly 6 can be inspected, and the circuit board assembly can be maintained and replaced as needed, without destroying other components of the electric oil pump, which helps to reduce costs and improve the maintenance efficiency. Specifically, in the present embodiment, the first housing 1 is detachably connected with the second housing 2 through a first connection portion, and the second housing 2 is detachably connected with the third housing 7 through a second connection portion. The first connection portion and the second connection portion are not arranged in the first inner chamber 80 or the second inner chamber 90. The first connection portion and the second connection portion are described in detail below.

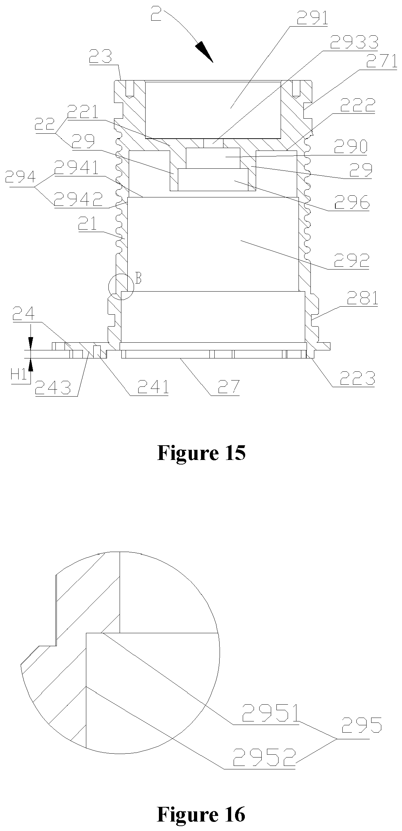

Referring to Figure 2a and Figure 15, the second housing 2 includes the partition portion 22. The partition portion 22 can support the first rotor assembly 8. The second housing 2 further includes a main body portion 21, the main body portion 21 extends along an axial direction of the second housing 2, the main body portion 21 is cylindrical, and an inner wall of the main body portion 21 can form at least part of the sidewall of the second inner chamber 90 shown in Figure 2a. The first housing 1 is detachably connected with the main body portion 21, and the main body portion 21 is detachably connected with the third housing 7 as well. In the present embodiment, the sidewall forming the first inner chamber 80 in Figure 2a includes part of the first housing 1 and part of the second housing 2, and the sidewall forming the second inner chamber 90 in Figure 2a includes part of the second housing 2 and part of the third housing 7. In the present embodiment, the partition portion 22 is circumferentially arranged along the inner wall of the main body portion 21, that is, the partition portion 22 is fixed to the main body portion 21. In the present embodiment, the partition portion 22 is integrally formed with the main body portion 21, and the partition portion 22 is arranged substantially perpendicular to the main body portion 21, where the "substantially" refers to that the perpendicularity is within a range of 1mm. In the present embodiment, the partition portion 22 is arranged at a middle-upper portion of the second housing 2, the second inner chamber 90 is formed between the partition portion 22 and the third housing 7, and the first inner chamber 80 is formed between the first housing 1 and the partition portion 22. Such a structure can ensure the sealing of the connection between the partition portion 22 and the main body portion 21, and can prevent the working medium in the first inner chamber 80 in Figure 2a from leaking through the connection between the main body portion 21 and the partition portion 22, and the structure is simple.

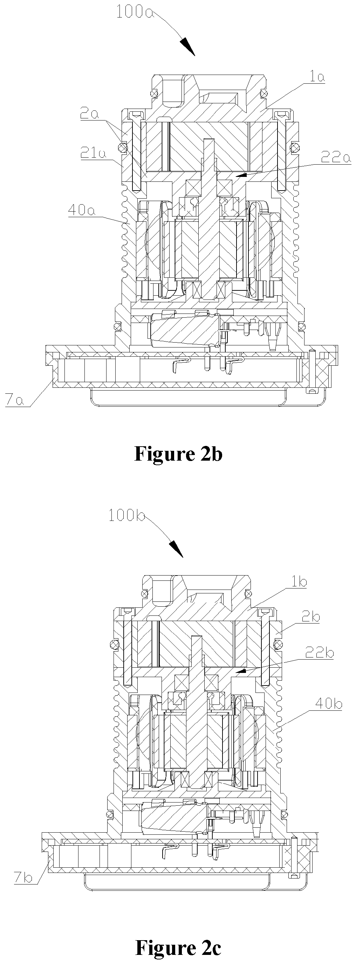

Referring to Figure 2b, Figure 2b is schematic structural view of a second embodiment of the electric oil pump. The structure of the second embodiment of the electric oil pump is described below.

In the second embodiment of the electric oil pump, the electric oil pump further includes a fourth housing, and the second housing includes the partition portion. Specifically, referring to Figure 2b, an electric oil pump 100a includes a first housing 1a, a second housing 2a, a third housing 7a and a fourth housing 40a. The first housing 1a is detachably connected with the second housing 2a and the fourth housing 40a. The third housing 7a is detachably connected with the fourth housing 40a. Specifically, the second housing 20a includes a main body portion 21a, the first housing 1a is connected with the main body portion 21a of the second housing 2a through screws or bolts, and the main body portion 21a of the second housing 2a is connected with the fourth housing 40a through screws or bolts. An electric oil pump 100b includes a partition portion 22a, and the partition portion 22a is integrally formed with the second housing 2a. Specifically, the partition portion 22a is integrally formed with the main body portion of the second housing 20a. Compared with the first embodiment of the electric oil pump, in the present embodiment, the electric oil pump further includes the fourth housing 40a, and the structure of the second housing 20a in the present embodiment is different from the structure of the second housing in the first embodiment of the electric oil pump. The structure of the second housing in the present embodiment is equivalent to dividing the second housing in the first embodiment of the electric oil pump into two components, which is relatively advantageous for saving raw materials during component processing and is further advantageous for reducing material costs during processing.

Referring to Figure 2c, Figure 2c is schematic structural view of a third embodiment of the electric oil pump. The structure of the third embodiment of the electric oil pump is described below.

In the third embodiment of the electric oil pump, the partition portion is an individual component. Specifically, referring to Figure 2c, the electric oil pump 100b includes a first housing 1b, a second housing 2b, a third housing 7b and a fourth housing 40b, the first housing 1b is detachably connected with the second housing 2b, and the third housing 7b is detachably connected with the fourth housing 40b. In the present embodiment, the electric oil pump 100b further includes a partition portion 22b, and the partition portion 22b is arranged between the second housing 2b and the fourth housing 40b. In the present embodiment, the partition portion 22b is detachably connected with the first housing 1b and the second housing 2b. The first housing 1b, the second housing 2b, the partition portion 22b and the fourth housing 40b are detachably connected with each other through screws and bolts. Apparently, in order to ensure the sealing of the connections of the components, sealing rings can be provided at the connections. Compared with the first embodiment of the electric oil pump, in the present embodiment, the partition portion is an individual component, which is advantageous for relatively reducing the processing difficulty of the second housing and saving raw materials during the component processing, and is further advantageous for reducing the material costs during processing.

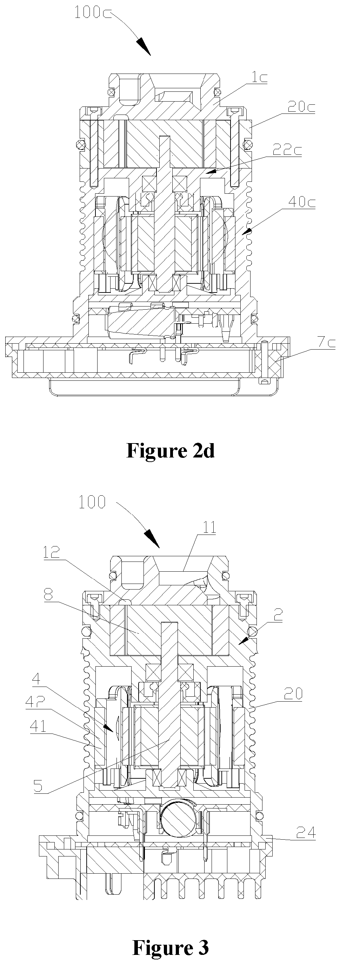

Referring to Figure 2d, Figure 2d is schematic structural view of a fourth embodiment of the electric oil pump. The structure of the fourth embodiment of the electric oil pump is described below.

In the fourth embodiment of the electric oil pump, the electric oil pump further includes a fourth housing, and the fourth housing includes a partition portion. Specifically, referring to Figure 2d, an electric oil pump 100c includes a first housing 1c, a second housing 20c, a third housing 7c and a fourth housing 40c. The first housing 1c is detachably connected with the second housing 2c and the fourth housing 40c, and the third housing 7c is detachably connected with the fourth housing 40c. Specifically, the first housing 1c is connected with the second housing 2c and the fourth housing 40c through screws or bolts, and the fourth housing 40c is connected with the third housing 7c through screws or bolts. The fourth housing 40c includes a partition portion 22c, and the partition portion 22c can support the first rotor assembly. Compared with the first embodiment of the electric oil pump, the structure of the second housing in the present embodiment is equivalent to dividing the second housing in the first embodiment of the electric oil pump into two components, which is advantageous for saving raw materials during the component processing, and is further advantageous for reducing the material costs during processing.

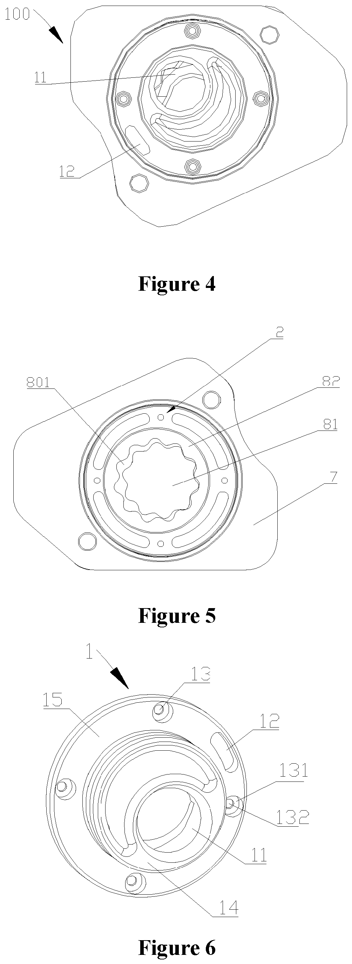

Referring to Figure 2a to Figure 5, in the present embodiment, the electric oil pump 100 includes the first rotor assembly 8. The first rotor assembly 8 includes a first rotor 81 and a second rotor 82, the first rotor 81 includes multiple external teeth, and the second rotor 82 includes multiple internal teeth. Referring to Figure 5, a hydraulic chamber 801 is formed between the internal teeth of the second rotor 82 and the external teeth of the first rotor 81. In the present embodiment, the second rotor 82 is sleeved on the circumference of the first rotor 81, and part of the internal teeth of the second rotor 82 engage with part of the external teeth of the first rotor 81. Referring to Figure 1 to Figure 5, the electric oil pump 100 includes a first flow port 11 and a second flow port 12, the first flow port 11 is used for the inflow of the working medium, and the second flow port 12 is used for the outflow of the working medium. Specifically, the working medium can enter the hydraulic chamber 801 through the first flow port 11, and can leave the hydraulic chamber 801 through the second flow port 12. Since there is a certain eccentric distance between the first rotor 81 and the second 82, when the first rotor 81 rotates, part of the external teeth of the first rotor 81 engage with part of the internal teeth of the second rotor 82, thereby driving the second rotor 82 to rotate. Volume of the hydraulic chamber 801 changes during one cycle of the rotation of the first rotor assembly 8. Specifically, when the first rotor assembly 8 is rotated by a certain angle from a starting point, the volume of the hydraulic chamber 801 is gradually increased to form partial vacuum, and the working medium is sucked from the first flow port 11 into the hydraulic chamber 801. When the first rotor assembly 8 continues rotating, the volume of the hydraulic chamber 801 filled with the working medium is gradually decreased, and the working medium is squeezed, so that the working medium entering the hydraulic chamber 801 is extruded out to the second flow port 12, thereby generating the power for flowing. In the present embodiment, the first inner chamber 80 is in communication with the first flow port 11 and the second flow port 12, and the first inner chamber 80 is not in communication with the second inner chamber 90. Since the first inner chamber of the electric oil pump is not in communication with the second inner chamber, the working medium cannot enter the second inner chamber. Thus, the second inner chamber does not need to be additionally provided with other structures to prevent the components in the second inner chamber from corrosion, and the electric oil pump has better sealing performance and a simpler structure, which helps to reduce costs. In the present embodiment, a first communication cavity is provided between the first flow port 11 and the hydraulic chamber 801, and a second communication cavity is arranged between the second flow port 12 and the hydraulic chamber 801. Such a structure buffers the working medium through the first communication cavity and the second communication cavity, which is advantageous for damping vibration and noise. The specific structure is described below.

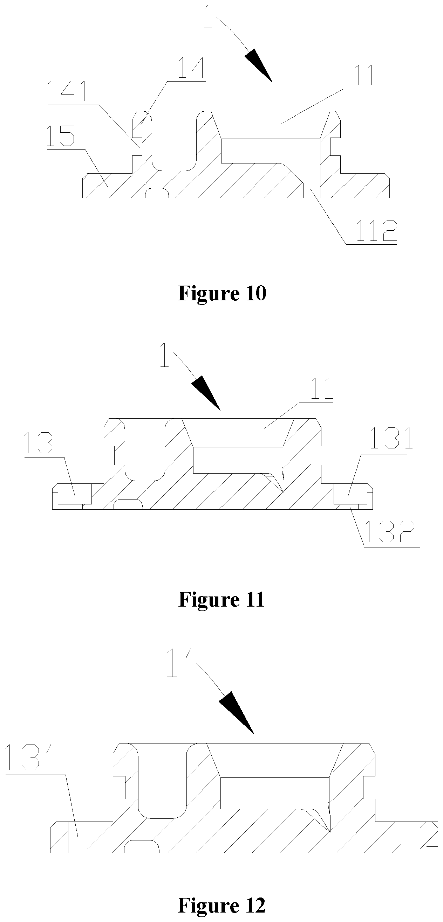

Referring to Figure 1 to Figure 8, the first housing 1 is detachably connected with the second housing 2 through a first connection portion 123, and the second housing 2 is detachably connected with the third housing 7 through a second connection portion 232. The first connection portion 124 and the second connection portion 234 are not arranged in the first inner chamber 80 or the second inner chamber 90. Specifically, in the present embodiment, the first connection 124 includes first screws 1231(as shown in Figure 2a). Referring to Figure 6, in order to improve the reliability of the connection, the first housing 1 includes a first flange portion 15. The first flange portion 15 extends along a radial direction of the electric oil pump, the first flange portion 15 is formed with first communication holes 13, and the first communication holes 13 are close to an edge of the first flange portion 15. The second housing 2 is formed with first threaded holes 231, and the first threaded holes 231 are formed along the main body portion 21 of the second housing 2. The first screws 1231 pass through the first communication holes 13 and are mounted from a side close to the first housing 1, and are screwed to the second housing 2. Such an arrangement allows at least part of the first screws 1231 to be disassembled outside the housing, and makes the disassembly of the electric oil pump more convenient, thereby facilitating the maintenance of the first rotor assembly of the electric oil pump. Apparently, the first housing 1 may be connected with the second housing 2 in other ways, for example, some detachable connection ways such as insertion and latching. Referring to Figure 11, in order to prevent the electric oil pump from interfering with other components when the electric oil pump is mounted on the transmission system, the first communication hole 13 includes a first counterbore 131 and a first through hole 132. A diameter of the first counterbore 131 is greater than a diameter of the first through hole 132, and a depth of the first counterbore 131 is slightly greater than a height of a nut of the first screw 1231, such that a top surface of the first screw 1231 is lower than an upper surface of the first flange portion 15 after the first screw 1231 is mounted, thereby preventing the first screw 1231 from interfering with other components. Apparently, in a case that a first screw avoidance portion is provide in a portion of the transmission system corresponding to the electric oil pump, it is not necessary to provide the first counterbore 131 for the first communication hole 13, and only the first through hole 132 is needed, such that the first communication hole 13 can be allowed to be closer to the radial edge of the first flange portion 15 or a distance between the first communication hole 13 and the edge of the first flange portion 15 can be larger, which facilitates the layout of the first communication hole.

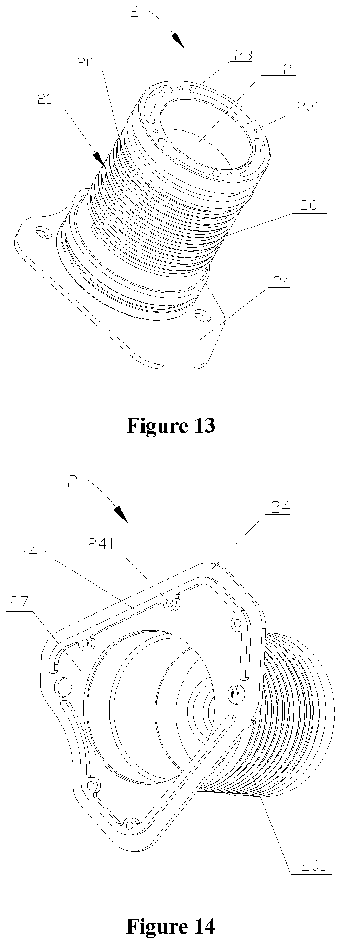

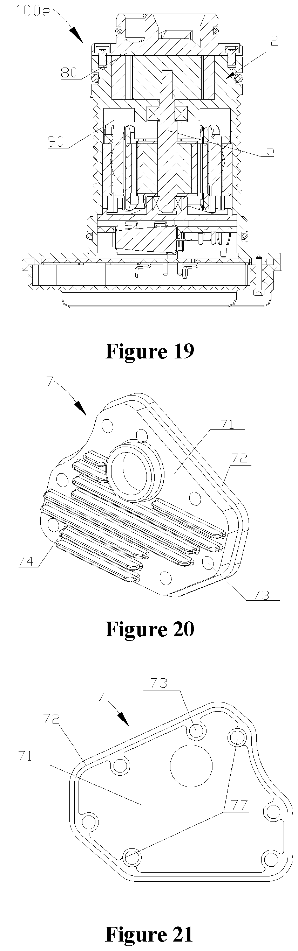

Referring to Figure 2a, the second housing 2a is detachably connected with the third housing 7 through the second connection portion 232. Specifically, in the present embodiment, the second connection portion 232 includes second screws 2321. Referring to Figure 14 and Figure 19, the third housing 7 is formed with second communication holes 73, the second housing 2 is formed with second threaded holes 241, the second threaded holes 241 are formed along the main body portion 21 of the second housing 2, and the second screws 2321 are mounted from a side close to the third housing 7 and is screwed to the second housing 2. Apparently, the third housing 7 may be formed with the second threaded hole, the second housing 2 may be formed with the second communication hole, and the second screws 2321 may be mounted from a side close to the second housing 2 and may be screwed to the third housing 7. The specific structure can be designed according to requirements of the electric oil pump. Such an arrangement makes the disassembly of the electric oil pump more convenient, thereby facilitating the inspection and maintenance of the components in the electric oil pump such as the circuit board assembly. Apparently, the second housing 2 may be connected with the third housing 7 in other detachable connection ways such as insertion and latching. In order to improve the reliability of the connection between the second housing 2 and the third housing 7 and to simplify the structure, a wall thickness of the third housing 7 at the second communication holes 73 is greater than a wall thickness of the third housing 7 at other portions. Referring to Figure 13 and Figure 14, the main body portion 21 of the second housing 2 includes a cylindrical portion 201 and a second flange portion 24. The cylindrical portion 201 forms at least part of the second inner chamber. The second flange portion 24 is formed by the cylindrical portion 201 protruding toward the circumference of the cylindrical portion 201. The second flange portion 24 is formed with the second threaded holes 241, and the wall thickness of the second flange portion 24 at the second threaded holes 241 is greater than the wall thickness of the second flange portion 24 at other portions Apparently, in order to simplify the structure and reduce the profile dimensions of the electric oil pump, the second housing 2 may not include the second flange portion, and the cylindrical portion 201 may be formed with the second threaded holes 241. To ensure the connection strength, the wall thickness of the cylindrical portion 201 at the second threaded holes is greater than or equal to the wall thickness of the cylindrical portion at other portions.

Referring to Figure 6 to Figure 11, Figure 6 to Figure 11 are schematic structural views of a first embodiment of the first housing shown in Figure 2a. In the present embodiment, the first housing 1 includes a first main body portion 14 and the first flange portion 15, and a diameter of the first main body portion 14 is smaller than a diameter of the first flange portion 15. The first housing 1 at least includes two first communication holes 13, and the first communication holes 13 are distributed in an array along a circumference of the first housing 1. In the present embodiment, the first communication holes 13 are formed on the first flange portion 15, and the first communication hole 13 is a counterbore. Specifically, the first communication hole 13 is a cylindrical counterbore. The first communication hole 13 includes the first counterbore 131 and the first through hole 132, where the diameter of the first counterbore 131 is greater than the diameter of the first through hole 132, and the depth of the first counterbore 131 is slightly greater than the height of a nut of the first screw 1231, such that the top surface of the first screw 1231 is lower than the upper surface of the first flange portion 15 after the first screw 1231 is mounted, thereby preventing the first screw 1231 from interfering with other components. Apparently, the first communication hole 13 may be a tapered counterbore or an end face counterbore. Such an arrangement can, on the one hand, ensure that the electric oil pump does not interfere with a mounting portion of a gearbox after the first screw 1231 is mounted, and on the other hand, makes the overall structure of the electric oil pump elegant. A minimum distance between the edge of the first communication hole 13 and an outer circumferential surface of the first flange portion 15 of the first housing 1 is greater than or equal to 1mm, such that it can be ensured that no gap is formed at the edge while processing the first communication hole 13 and no damage is done to the outer circumferential surface of the first flange portion 15 of the first housing 1. A minimum distance between the edge of the first communication hole 13 and an outer circumferential surface of the first main body portion 14 is greater than or equal to 1mm, such that no damage is done to the outer circumferential surface of the first main body portion 14 of the first housing 1 while processing the first communication hole 13.

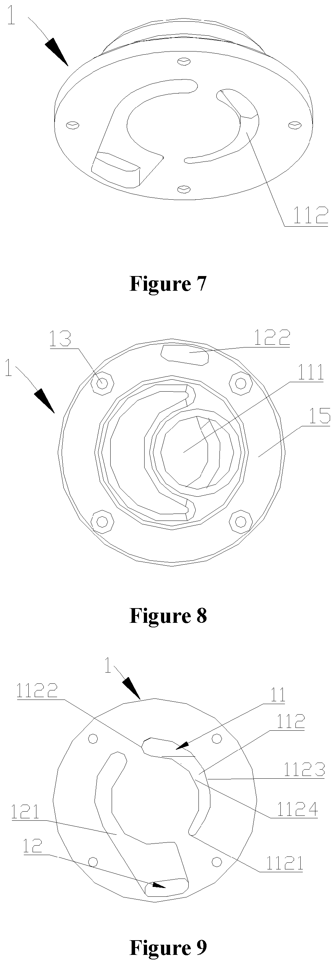

Referring to Figure 6 to Figure 11, the first housing 1 is further formed with the first flow port 11, the second flow port 12, the first communication cavity 112 and the second communication cavity 121. Referring to Figure 2a and Figure 5, the first communication cavity 112 is arranged between the first flow port 11 and the hydraulic chamber 801, the first communication cavity 112 is in communication with the first flow port 11, the second communication cavity 121 is arranged between the second flow port 12 and the hydraulic chamber 801, and the second communication cavity 121 is in communication with the second flow port 12. The first communication cavity 112 and the second communication cavity 121 are configured to buffer the working medium, which is advantageous for damping vibration and noise. In the present embodiment, the first flow port 11 is formed at the first main body portion 14 of the first housing 1, the first communication cavity 112 is arranged at the first flange portion 15 of the first housing 1, and the first flow port 11 is substantially circular. The "substantially circular" refers to that the roundness is within a range of 1mm. Apparently, the first flow port 11 may also in other shapes such as an ellipse. Referring to Figure 9, the first communication cavity 112 is substantially arc-shaped, the first communication cavity 112 includes a head portion 1121 and a tail portion 1122, and a flow sectional area of the first communication cavity 112 gradually increases from the head portion 1121 to the tail portion 1122. In the present embodiment, an inner circumferential surface of the first communication cavity 112 is arc-shaped, and other features such as recess portions or protruding portions may be provided on the inner circumferential surface of the first communication cavity. The first flow port 11 is arranged corresponding to the tail portion 1122, which cooperates with the hydraulic chamber 801 in Figure 5 to form a certain degree of vacuum at the tail portion 1122, and is advantageous for the suction of the working medium.

The second communication cavity 121 and the first communication cavity 112 are substantially circumferentially distributed in the first housing 1, and a line connecting a center of the first flow port 11 and a center of the second flow port 12 substantially passes through a center of the first housing 1, which is advantageous for taking advantage of the entire circumference of the entire electric oil pump and improving the working pressure of the working medium passing through the electric oil pump.

A flow sectional area at the connection between the second flow port 12 and the second communication cavity 121 is greater than the flow sectional area at other portions of the second communication cavity 121, which allows the working medium entering the second communication cavity 112 from the hydraulic chamber 801 in Figure 5 to be discharged as soon as possible.

In the present embodiment, a fluid flow direction at the second flow port 12 and a fluid flow direction at the first flow port 11 are both arranged along the axial direction of the electric oil pump, that is, the fluid flow direction at the second flow port 12 and the fluid flow direction at the first flow port 11 are arranged in a same direction of the electric oil pump, and an inflow direction of the working medium is substantially parallel to an outflow direction thereof, such that only one sealing portion is required to be arranged between the electric oil pump and the transmission system and the structure is simple. Apparently, the fluid flow direction at the first flow port may be arranged perpendicular to the fluid flow direction at the second flow port, the second flow port may not be arranged in the first housing 1, but be arranged in the second housing 2, for example, such that the inflow direction of the working medium is arranged perpendicular to or at an angle to the outflow direction thereof, to facilitate the assembly of the electric oil pump and the transmission system or to hang the electric oil pump outside the transmission system.

Referring to Figure 12, Figure 12 is a schematic structural view of a second embodiment of the first housing shown in Figure 2a. Compared with the first embodiment of the first housing, in the present embodiment, a connection hole 13' of a first housing 1' is a through hole, which is advantageous for improving the connection strength between the first housing and the second housing.

Referring to Figure 2a, the electric oil pump 100 includes an outer sealing portion, the outer sealing portion includes a first sealing ring 30 and a second sealing ring 32 sleeved on the outer circumferential surface of the second housing 2, the first sealing ring 30 is close to the first housing 1, and the second sealing ring 32 is close to the third housing 7. Referring to Figure 15, the first sealing ring 30 is sleeved on a second groove 271 of the second housing 2, and the second sealing ring 32 is sleeved on a third groove 281 of the second housing 2. Referring to Figure 2, such an arrangement can separate the working medium at the inlet and outlet from a space between the first sealing ring 30 and the second sealing ring 32, such that the two do not affect with each other. Referring to Figure 2a, in the present embodiment, the electric oil pump further includes a third sealing ring 31. Referring to Figure 10, the first main body portion 14 is provided with a first groove 141, the third sealing ring 31 is arranged in the first groove 141 of the first housing 1. In a case that the electric oil pump 100 is mounted in a gearbox of a vehicle or in an electric drive unit of a vehicle, such an arrangement is advantageous for isolating the low-pressure working medium on the inlet side from the high-pressure working medium on the outlet side.

Referring to Figure 13 and Figure 14, the main body portion 21 includes the cylindrical portion 201 and the second flange portion 24, the cylindrical portion 201 includes a first end portion 23 and a second end portion 27, the second flange portion 24 is integrally formed with the second end portion 27, and the first end portion 23 is arranged away from the second flange portion 24. Specifically, in the present embodiment, the first end portion 23 is formed with the first threaded holes 231, the first threaded holes 231 are distributed in a circumferential array or uniformly distributed, the first communication holes 13 of the first housing 1 are arranged corresponding to the first threaded holes 231 of the second housing 2, and the first housing 1 is connected with the second housing 2 through the first connection portion 123. The second flange portion 24 is formed with the second threaded holes 241, and the second threaded holes 241 are arranged corresponding to the second communication holes 73 of the third housing 7. Referring to Figure 2a, the second housing 2 is connected with the third housing 7 through the second connection portion 232, wherein the first threaded holes 231 and the second threaded holes 241 are both blind holes. Specifically, the first housing 1 is connected with the second housing 2 through the first screws 1231, the second housing 2 is connected with the third housing 7 through the second screws 2321. In the present embodiment, the second flange portion 24 further includes a first protrusion 242, and the second threaded holes 241 are formed on the first protrusion 242. A thickness of the second flange portion 24 at the first protrusion 242 is greater than the thickness of the second flange portion 24 at other portions, which is advantageous for improving the connection strength without increasing the overall thickness and weight of the second housing 2, and is beneficial to reduce costs. Apparently, in a case that the thickness of the second flange portion 24 of the second housing 2 is thick enough, the second flange portion 24 may not be provided with the first protrusion 242, where the "thick enough" refers to that the thickness of the second flange portion is greater than or equal to 3mm.

Referring to Figure 2a and Figure 15, the partition portion 22 further includes a first support portion 29 and a main body portion 221 of the partition portion, the main body portion 221 of the partition portion can support the first rotor assembly 8, and the first support portion 29 protrudes from the main body portion 221 of the partition portion toward the second inner chamber 90. The first support portion 29 can directly or indirectly support the pump shaft 5. Referring to Figure 2b to Figure 2d, according to the arrangement of the partition portion, the first support portion 29 changes correspondingly with the position of the partition portion 22, which will not be further described herein.

Referring to Figure 15, the second housing 2 is formed with an upper chamber 291 and a lower chamber 292, the upper chamber 291 is separated from the lower chamber 292 through the partition portion 22, and the partition portion 22 is integrally formed with the first support portion 29.

Figure 15 is a first embodiment of the second housing shown in Figure 2a. Referring to Figure 2, the electric oil pump 100 includes a first bearing 60, the pump shaft 5 is supported on the first support portion 29 by the first bearing 60, an inner circumferential surface of the first bearing 60 is in contact with an outer circumferential surface of the pump shaft 5, and an outer circumferential surface of the first bearing 60 is in contact with an inner circumferential surface of the first support portion 29. Specifically, referring to Figure 15, the first support portion 29 includes a first accommodating portion 290, the first accommodating portion 290 is formed with at least part of a first accommodating cavity, and at least part of an inner circumferential surface of the first accommodating portion 290 surrounds the first accommodating cavity. Referring to Figure 2a or Figure 3, the pump shaft 5 passes through the first accommodating cavity, and at least part of the outer circumferential surface of the pump shaft 5 is in a clearance fit with the inner circumferential surface of the first accommodating portion 290; or the first bearing 60 is provided in the first accommodating cavity, referring to Figure 2a or Figure 3, the pump shaft 5 passes through the first bearing 60, and the outer circumferential surface of the first bearing 60 is in an interference fit with the inner circumferential surface of the first accommodating portion 290. Specifically, in the present embodiment, the electric oil pump is provided with the first bearing 60, the first bearing 60 is arranged in the first accommodating cavity, and the pump shaft 5 passes through the first bearing 60, such that the first support portion 29 indirectly supports the pump shaft through the first bearing 60.

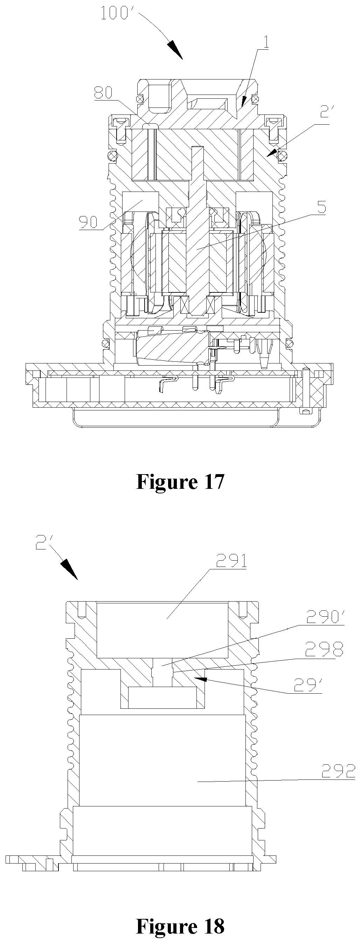

Referring to Figure 17, Figure 17 is a schematic structural view of a fifth embodiment of the electric oil pump. Figure 18 is the second embodiment of the second housing shown in Figure 17. Referring to Figure 17 and Figure 18, in the present embodiment, the pump shaft 5 is directly supported on a first support portion 29'. Specifically, the first support portion 29' includes a first accommodating portion 290', and the first accommodating portion 290' can form at least part of the first accommodating cavity. In the present embodiment, the first accommodating cavity is in communication with part of the first inner chamber 80, the pump shaft 5 passes through the first accommodating cavity, and at least part of the outer circumferential surface of the pump shaft 5 is in a clearance fit with the inner circumferential surface of the first accommodating portion 290'. The inner circumferential surface of the first support portion 29' is provided with a lubrication groove 298, which is helpful to lubricate the pump shaft and thereby facilitates the rotation of the pump shaft. Compared with the first embodiment of the electric oil pump, in the present embodiment, the first support portion 29 can directly support the pump shaft by the tolerance fit between the first accommodating portion 290' and the pump shaft 5 without additionally providing the first bearing, thereby making the structure of the electric oil pump more compact.

Referring to Figure 15, the partition portion 22 is provided with a communication hole 2933, and the communication hole 2933 communicates the upper chamber 291 with the lower chamber 292. Referring to Figure 2a, the pump shaft 5 extends into the upper chamber 291 through the communication hole 2933.

The first inner chamber 80 is isolated from the second inner chamber 90. There are two embodiments about the isolation arrangement herein. In the first embodiment, referring to Figure 2a, the electric oil pump 100 includes the sealing portion, at least part of the sealing portion is supported by the first support portion 29, the working medium in the first inner chamber 80 is not in communication with the working medium in the second inner chamber 90 due to the sealing portion 50 and the partition portion 22. Specifically, referring to Figure 15, the first support portion 29 includes a second accommodating portion 296, the second accommodating portion 296 is formed with at least part of a second accommodating cavity, and at least part of the inner circumferential surface of the second accommodating portion 296 surrounds the second accommodating cavity. Referring to Figure 2a, the sealing portion 50 includes an oil seal, and the oil seal is provided in the second accommodating cavity. The pump shaft 5 shown in Figure 2 passes through the oil seal, and the inner circumferential surface of the oil seal is in contact with at least part of the outer circumferential surface of the pump shaft 5. The outer circumferential surface of the oil seal 50 is sealingly fitted to the inner circumferential surface of the second accommodating portion 296, which can prevent the working medium in the first inner chamber from flowing into the second inner chamber and can thereby avoid damage to the circuit board assembly in the second inner chamber.

In the second embodiment, referring to Figure 19, Figure 19 is a schematic structural view of a sixth embodiment of the electric oil pump. Referring to Figure 15, the pump shaft 5 passes through the second accommodating portion 296 in Figure 15. A clearance is formed between the inner circumferential surface of the second accommodating portion 296 and at least part of the outer circumferential surface of the pump shaft 5, and the clearance is small enough that the working medium in the first inner chamber 80 cannot flow through. The clearance can prevent the working medium in the first inner chamber 80 in Figure 2 from entering the second inner chamber 90 in Figure 2a through the clearance. The specific size of the clearance is determined by parameters such as the roughness of the outer circumferential surface of the pump shaft 5, the roughness of the inner circumferential surface of the second accommodating portion and the viscosity of the oil. In the second embodiment, the working medium in the first inner chamber is not in communication with the working medium in the second inner chamber by the arrangement of the clearance.

Referring to Figure 2a, the electric oil pump 100 further includes a second support portion 91. The pump shaft 5 can be directly or indirectly supported on the second support portion 91. The first support portion 29 and the second support portion 91 are coaxially arranged, which is advantageous for improving the stability of supporting the pump shaft 5.

Referring to Figure 2a, the electric oil pump 100 further includes a partition plate 9. The partition plate 9 is arranged in the second inner chamber 90, the second support portion 91 is integrally formed with the partition plate 9, and the second support portion 91 is arranged protruding from the partition plate 9 toward the second inner chamber 90. The structure of the second support portion 91 is described in detail below.

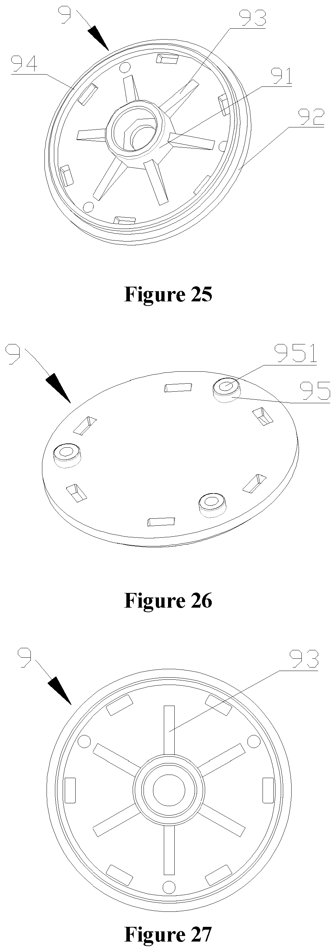

The second support portion 91 can directly or indirectly provide support for the pump shaft 5. Referring to Figure 25 to Figure 28, the partition plate 9 includes a third accommodating portion 911, the third accommodating portion 911 is formed with at least part of a third accommodating cavity, and at least part of an inner circumferential surface of the third accommodating portion 911 surrounds the third accommodating cavity. There are two embodiments. In the first embodiment, referring to Figure 2a, the electric oil pump includes a second bearing 70, the second bearing 70 is provided in the third accommodating cavity, and the pump shaft 5 in Figure 2a passes through the second bearing 70. Specifically, the inner circumferential surface of the second bearing 70 is in contact with at least part of the outer circumferential surface of the pump shaft 5, and an outer circumferential surface of the second bearing 70 is in an interference fit with the inner circumferential surface of the third accommodating portion 911, such that the first support portion 29 indirectly provides support for the pump shaft through the second bearing 70.

In the second embodiment, the pump shaft 5 in Figure 2a passes through the third accommodating cavity, and at least part of the outer circumferential surface of the pump shaft 5 in Figure 2a is in a clearance fit with the inner circumferential surface of the third accommodating portion 911, such that the second support portion 91 can directly provide support for the pump shaft by the tolerance fit between the third accommodating portion 911 and the pump shaft 5 in Figure 2a without additionally providing the second bearing, thereby making the structure of the electric oil pump more compact. Referring to Figure 2a, the first bearing 60 and the second bearing 70 can be rolling bearings or sliding bearings. For medium and low speeds, the electric oil pump with the sliding bearing can meet the requirements of wear and rotation accuracy while reducing the cost. For high-speed electronic oil pumps, wear, rotation accuracy and bearing capacity are key factors in bearing selection. In such cases, rolling bearings will be preferred.

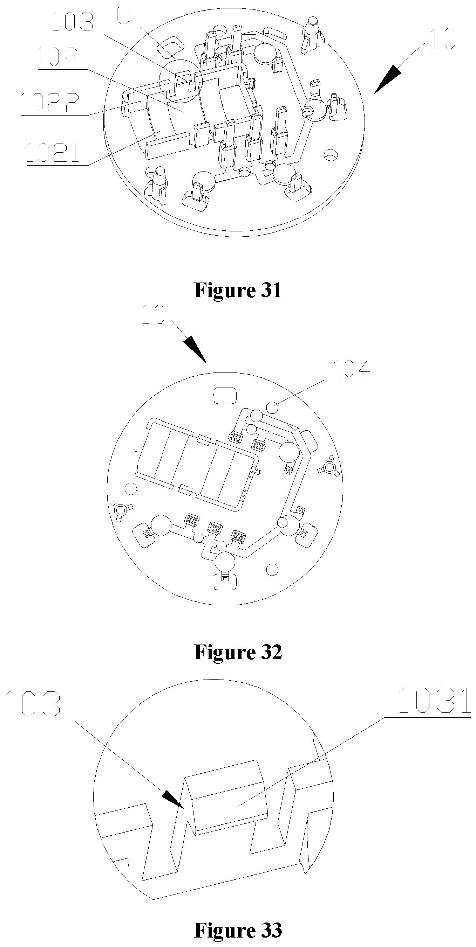

Referring to Figure 25 to Figure 28, the partition plate 9 includes the second support portion 91, a first bottom portion 92, a first annular protrusion 94 and reinforcing ribs 93. The reinforcing ribs 93 are distributed in the circumferential array or uniformly distributed. Specifically, the reinforcing ribs 93 connect the second support portion 91 with the first bottom portion 92. Such an arrangement can ensure the mechanical strength of the second support portion 91, such that the second support portion 91 is less likely to be deformed. In the present embodiment, the reinforcing rib 91 has a substantially triangular shape. Apparently, the reinforcing rib may also have other shapes such as rectangular or trapezoidal. Compared with the second support portion 91, the first annular protrusion 94 is arranged closer to the outer edge of the partition plate 9. A diameter of an outer wall of the first annular protrusion 94 is greater than that of the second support portion 91. Referring to Figure 2a or Figure 3, in the present embodiment, the partition plate 9 is fixedly connected with the second housing 2. Specifically, referring to Figure 33 and Figure 15, the first annular protrusion 94 is in an interference fit with the inner circumferential surface of the cylindrical portion of the second housing 2. Apparently, the partition plate 9 may be connected with the second housing 2 by screws or bolts or by riveting. An outer circumferential surface of the first bottom portion 92 of the partition plate 9 is in an interference fit with the second housing 2. Referring to Figure 26 to Figure 28, the partition plate 9 further includes at least two third annular protrusions 95, and the third annular protrusions 95 axially extend in a direction away from the second support portion 91. Specifically, in the present embodiment, the partition plate 9 includes three third annular protrusions 95, and the third annular protrusions 95 are substantially distributed in the circumferential array or uniformly distributed. A threaded hole 951 is arranged at a center of each third annular protrusion 95, which facilitates the fixation and installation of the subsequent components such as a mounting bracket 10 in Figure 2a.

Referring to Figure 15 and Figure 16, the second housing 2 further includes a first stepped portion 294. The first stepped portion 294 includes a first position-limiting surface 2941 and a second position-limiting surface 2942. The first stepped portion 294 is arranged in the lower chamber 292 of the second housing 2, and the first stepped portion 294 can serve as a position-limit for the stator assembly 4 in Figure 2a in the axial direction of the electric oil pump. Referring to Figure 15 and Figure 16, the second housing 2 further includes a second stepped portion 295. The second stepped portion 295 includes a third position-limiting surface 2951 and a fourth position-limiting surface 2952, and the second stepped portion 295 is closer to the second flange portion 24 of the second housing 2 than the first stepped portion 294. The stator assembly 4 in Figure 2a is in an interference fit with the second housing 2. Specifically, an outer wall of the stator assembly 4 is in an interference fit with at least part of the second position-limiting surface 2942 of the first stepped portion 294 of the second housing 2. The first position-limiting surface 2941 of the first stepped portion 294 abuts against the stator assembly 4, thereby realizing the position-limiting of the stator assembly 4 in Figure 1 by the first stepped portion 294 in the axial direction of the electric oil pump and facilitating the position-limiting of the stator assembly.

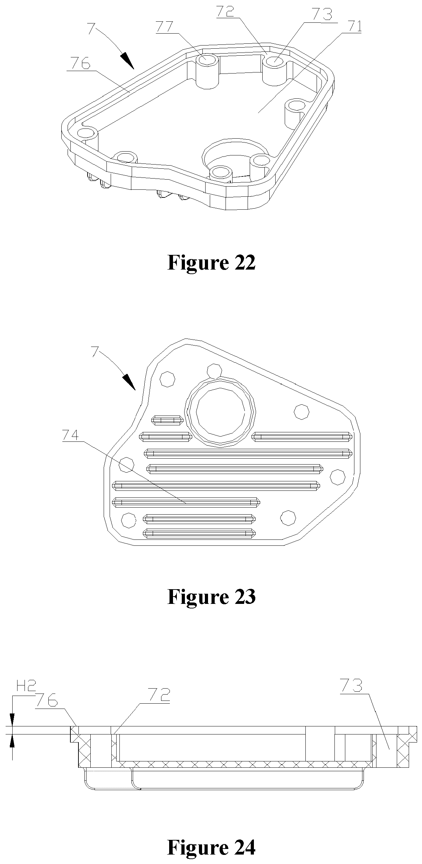

Referring to Figure 20 to Figure 24, the third housing 7 includes a main body 71 and a connection portion 72. Taking the main body 71 as a reference surface, the connection portion 72 is located below the main body 71. The third housing 7 is formed with the second communication holes 73, the second communication holes 73 are arranged corresponding to the second threaded holes 241 of the second housing 2 in Figure 14. In the present embodiment, the second housing 2 is connected with the third housing 7 through the second screws 2321 in Figure 2a. Apparently, the two may also be connected with each other by other connection ways such as insertion, latching or welding. Referring to Figure 24, the connection portion 72 includes a position-limiting portion 76, and a height H2 of the position-limiting portion 76 is substantially equal to a height H1 of a position-limiting portion 243 of the second housing 2 in Figure 15 where the "substantially equal" refers to that an absolute value of the height difference is within 0.3mm. Such an arrangement can ensure that contact faces of the third housing 7 and the second housing 2 are as close as possible, and the third housing 7 does not incline during the assembly process, thereby avoiding affecting the insertion between the socket and the connector. The third housing 7 is further formed with mounting holes 77, and the mounting holes 77 are configured to connect with the gearbox or the drive unit. Two mounting holes 77 are provided in the present embodiment.

Referring to Figure 20 to Figure 24, the third housing 7 is further formed with protruding ribs 74, the protruding ribs 74 are integrally formed with the third housing 7, and the protruding ribs 74 protrude toward a direction away from the second housing 2. In the present embodiment, the protruding ribs 74 are arranged on the third housing 7 as much as possible to increase a heat dissipation area, which facilitates the heat dissipation of the circuit board. In the present embodiment, the shape of a transverse section of the protruding rib 74 is rectangular. Apparently, the transverse section may also be in other shapes such as trapezoid, triangle, and arc-shaped.

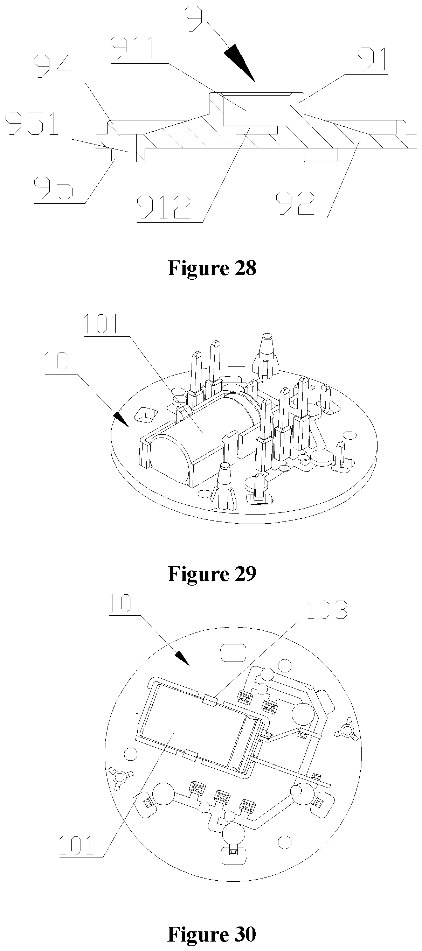

Referring to Figure 2a and Figure 29 to Figure 33, the circuit board assembly 6 includes a circuit board 61, electronic components and the mounting bracket 10. The mounting bracket 10 is arranged between the circuit board 61 and the partition plate 9. The mounting bracket 10 is fixedly connected with the partition plate 9. Specifically, the mounting bracket 10 is connected with the partition plate 9 by screws and bolts. Apparently, the mounting bracket 10 may also be connected with the partition plate 9 by other connection ways such as riveting. The mounting bracket 10 is electrically connected with the circuit board 61, and the mounting bracket 10 can support large-volume electronic components. Referring to Figure 29 to Figure 33, the mounting bracket 10 includes an accommodating portion 102. The accommodating portion 102 is integrally formed with the mounting bracket 10 by injection molding. The accommodating portion 102 includes a bottom supporting portion 1021 and a side portion 1022, the bottom supporting portion 1021 and the side portion 1022 form the accommodating cavity. In the present embodiment, the accommodating cavity is provided with a large-volume electronic component, and the large-volume electronic component is a capacitor 101. In the present embodiment, the bottom supporting portion 1021 is substantially arc-shaped, the bottom supporting portion 1021 is in contact with part of an outer circumferential surface of the capacitor 101, and the bottom supporting portion 1021 and the side portion 1022 are provided to facilitate circumferential positioning of the capacitor 101, thereby ensuring that the capacitor 101 do not move circumferentially. The mounting bracket 10 further includes as least two latching portions 103. In the present embodiment, the mounting bracket includes two latching portions 103, and the two latching portions 103 are arranged two sides of the capacitor 101. The latching portion 103 includes a first surface 1031. During the process of mounting the capacitor 101 into the accommodating portion 102, the capacitor 101 come into contact with the first surface 1031 of the latching portion 103 first, and at this time, the first inclined surface 1031 is tangent to the outer circumferential surface of the capacitor 101. When the capacitor 101 is further mounted into the accommodating portion 102, there will be a component force acting on the first surface 1031, so that the latching portion 103 is opened outward. When the part of the outer circumferential surface of the capacitor 101 is in contact with the bottom supporting portion 1021, no acting force is generated between the part of the outer circumferential surface of the capacitor 101 and the first surface of the latching portion 103, and at this time, the latching portion 103 which was originally in the open state is restored to its initial position. On the one hand, such an arrangement can ensure that the large capacitor does not move in a vertical direction, and on the other hand, it will make the disassembly and assembly of the large capacitor simpler, thereby improving the disassembly and assembly efficiency of the large capacitor. The mounting bracket 10 further includes at least two through holes 104, and the through holes 104 are substantially distributed in the circumferential array or uniformly distributed. In the present embodiment, the number of the through holes 104 is substantially equal to the number of the threaded holes 951 of the third annular protrusions 95 of the partition plate 9. Specifically, the mounting bracket 10 includes three through holes 104, and the number of the through holes 104 is equal to the number of the threaded holes 951 of the third annular protrusions 95 of the partition plate 9.

## Claims

1. An electric oil pump (10), comprising: a pump housing, a first rotor assembly (8), a pump shaft (5), a second rotor assembly (3), a stator assembly (4) and a circuit board assembly (6), wherein
the pump housing at least comprises a first housing (1), a second housing (2) and a third housing (7), the electric oil pump (10) has a pump inner chamber, the pump inner chamber comprises a first inner chamber (80) and a second inner chamber (90), a sidewall forming the first inner chamber (80) comprises part of the first housing (1) and part of the second housing (2), a sidewall forming the second inner chamber (90) comprises part of the third housing (7), and the third housing (7) is configured to shield the circuit board assembly (6);
the first rotor assembly (8) is accommodated in the first inner chamber (80), and the second rotor assembly (3), the stator assembly (4) and the circuit board assembly (6) are accommodated in the second inner chamber (90);
the electric oil pump (10) comprises a partition portion (22), the partition portion (22) is arranged between the first housing (1) and the third housing (7), and the first inner chamber (80) and the second inner chamber (90) are located on two sides of the partition portion (22); and
the first inner chamber (80) is isolated from the second inner chamber (90) by the partition portion (22), or the electric oil pump (10) further comprises a sealing portion (50), and the first inner chamber (80) is isolated from the second inner chamber (90) by the partition portion (22) and the sealing portion (50),
the electric oil pump (10) is **characterized in that**,
the electric oil pump (10) further comprising a partition plate (9) to further isolate the second rotor assembly (3) and the stator assembly (4) from the circuit board assembly (6), wherein the partition plate (9) is provided in the second inner chamber (90), the electric oil pump (10) further comprises a second support portion (91), the second support portion (91) is integrally formed with the partition plate (9), the second support portion (91) is arranged protruding from the partition plate (9) toward the second inner chamber (90), the electric oil pump (10) comprises a second bearing (70), and the pump shaft (5) is directly supported on the second support portion (91), or the pump shaft (5) is supported on the second support portion (91) through the second bearing (70).

2. The electric oil pump (10) according to claim 1, wherein the second housing (2) is detachably connected with the first housing (1), the second housing (2) is closer to the second rotor assembly (3) than the first housing (1), the second housing (2) comprises the partition portion (22), and the partition portion (22) is configured to support the first rotor assembly (8).

3. The electric oil pump (10) according to claim 1, wherein the second housing (2) is detachably connected with the first housing (1), the second housing (2) is closer to the second rotor assembly (3) than the first housing (1), the partition portion (22) is detachably connected with the first housing (1) and the second housing (2), the partition portion (22) is configured to support the first rotor assembly (8), and the partition portion (22) is closer to the second rotor assembly (3) than the second housing (2).

4. The electric oil pump (10) according to claim 1, further comprising a fourth housing (40a), wherein the fourth housing (40a) is detachably connected with the second housing (2), the fourth housing (40a) is detachably connected with the third housing (7), the fourth housing (40a) comprises the partition portion (22), and the partition portion (22) is configured to support the first rotor assembly (8).

5. The electric oil pump (10) according to any one of claims 1 to 4, wherein the partition portion (22) comprises a first support portion (29), the first support portion (29) is arranged protruding from a main body portion (221) of the partition portion (22) toward the second inner chamber (90), and the pump shaft (5) is directly or indirectly supported on the first support portion (29).

6. The electric oil pump (10) according to claim 5, wherein
the first support portion (29) comprises a first accommodating portion (290), the first accommodating portion (290) is formed with at least part of a first accommodating cavity, the first accommodating cavity is surrounded by at least part of an inner circumferential surface of the first accommodating portion (290), and
the pump shaft (5) passes through the first accommodating cavity, and at least part of an outer circumferential surface of the pump shaft (5) is in a clearance fit with the inner circumferential surface of the first accommodating portion (290); or the electric oil pump (10) comprises a first bearing (60), the first bearing (60) is provided in the first accommodating cavity, the pump shaft (5) passes through the first bearing (60), and an outer circumferential surface of the first bearing (60) is in an interference fit with the inner circumferential surface of the first accommodating portion (290).

7. The electric oil pump (10) according to claim 6, wherein the first support portion (29) comprises a second accommodating portion (296), the second accommodating portion (296) is formed with at least part of a second accommodating cavity, the second accommodating cavity is surrounded by at least part of an inner circumferential surface of the second accommodating portion (296), the sealing portion (50) comprises an oil seal, the oil seal is provided in the second accommodating cavity, the pump shaft (5) passes through the oil seal, and an outer circumferential surface of the oil seal is sealingly fitted to the second accommodating portion (296).

8. The electric oil pump (10) according to claim 6, wherein the first support portion (29) comprises a second accommodating portion (296), at least part of the pump shaft (5) passes through the second accommodating portion (296); and a clearance is formed between the inner circumferential surface of the second accommodating portion (296) and at least part of the outer circumferential surface of the pump shaft (5), the clearance is smaller than a penetration distance of a working medium in the first inner chamber (80), and the clearance is configured to prevent the working medium in the first inner chamber (80) from entering the second inner chamber (90) through the clearance.

9. The electric oil pump (10) according to any one of claims 1 to 8, wherein
the second rotor assembly (3) is arranged between the first rotor assembly (8) and the circuit board assembly (6); the first rotor assembly (8) is arranged toward to one end of the pump shaft (5), the second rotor assembly (3) is arranged close to another end of the pump shaft (5), the circuit board assembly (6) is close to one end of the pump shaft (5) mounted with the second rotor assembly (3); and
one end of the pump shaft (5) close to the first rotor assembly (8) extends into the first inner chamber (80), and another end of the pump shaft (5) close to the second rotor assembly (3) extends into the second inner chamber (90).

10. The electric oil pump (10) according to claim 1, wherein
the partition plate (9) comprises a third accommodating portion (911), the third accommodating portion (911) is formed with at least part of a third accommodating cavity, and the third accommodating cavity is surrounded by at least part of an inner circumferential surface of the third accommodating portion (911), and
the pump shaft (5) passes through the third accommodating cavity, and at least part of the outer circumferential surface of the pump shaft (5) is in a clearance fit with an inner circumferential surface of the third accommodating portion (911); or the electric oil pump (10) comprises a second bearing (70), the second bearing (70) is provided in the third accommodating cavity, the pump shaft (5) passes through the second bearing (70), and an outer circumferential surface of the second bearing (70) is in an interference fit with the inner circumferential surface of the third accommodating portion (911).

11. The electric oil pump (10) according to any one of claims 1 to 10, wherein the first housing (1) is detachably connected with the second housing (2) through a first connection portion, the second housing (2) is detachably connected with the third housing (7) through a second connection portion, and the first connection portion and the second connection portion are not arranged in the first inner chamber (80) or the second inner chamber (90).

12. The electric oil pump (10) according to claim 11, wherein the first connection portion comprises first screws (1231), the first housing (1) comprises a first flange portion (15), the first flange portion (15) is arranged protruding from the first housing (1), the first flange portion (15) is formed with first communication holes (13), the second housing (2) is formed with first threaded holes (231), the first threaded holes (231) are formed along a main body portion (21) of the second housing (2), the first screws (1231) pass through the first communication holes (13) and are mounted from a side close to the first housing (1), and the first screws (1231) are screwed to the second housing (2).

13. The electric oil pump (10) according to any one of claims 1 to 12, wherein the electric oil pump (10) comprises an outer sealing portion (50), the outer sealing portion (50) comprises a first sealing ring (30) and a second sealing ring (32) which are sleeved on an outer circumferential surface of the second housing (2), the first sealing ring (30) is arranged close to the first housing (1), and the second sealing ring (32) is arranged close to the third housing (7).

14. The electric oil pump (10) according to claim 13, wherein
the first rotor assembly (8) comprises a first rotor (81) and a second rotor (82), a hydraulic chamber (801) with a variable volume is formed between the first rotor (81) and the second rotor (82), the electric oil pump (10) further comprises a first flow port (11) and a second flow port (12), the working medium flows into the electric oil pump (10) through the first flow port (11), and the working medium flows out of the electric oil pump (10) through the second flow port (12); and
the electric oil pump (10) further comprises a first communication cavity (112) and a second communication cavity (121), the first communication cavity (112) is arranged between the first flow port (11) and the hydraulic chamber (801), the first communication cavity (112) is in communication with the first flow port (11), the second communication cavity (121) is arranged between the second flow port (12) and the hydraulic chamber (801), and the second communication cavity (121) is in communication with the second flow port (12).

## Patentansprüche

1. Elektrische Ölpumpe (10), aufweisend: ein Pumpengehäuse, eine erste Rotorbaugruppe (8), eine Pumpenwelle (5), eine zweite Rotorbaugruppe (3), eine Statorbaugruppe (4) und eine Platinenbaugruppe (6), wobei
das Pumpengehäuse zumindest ein erstes Gehäuse (1), ein zweites Gehäuse (2) und ein drittes Gehäuse (7) aufweist, die elektrische Ölpumpe (10) eine Pumpeninnenkammer hat, die Pumpeninnenkammer eine erste Innenkammer (80) und eine zweite Innenkammer (90) aufweist, eine die erste Innenkammer (80) bildende Seitenwand einen Teil des ersten Gehäuses (1) und einen Teil des zweiten Gehäuses (2) aufweist, eine die zweite Innenkammer (90) bildende Seitenwand einen Teil des dritten Gehäuses (7) aufweist, und das dritte Gehäuse (7) dafür ausgelegt ist, die Platinenbaugruppe (6) abzuschirmen;
die erste Rotorbaugruppe (8) in der ersten Innenkammer (80) untergebracht ist, und die zweite Rotorbaugruppe (3), die Statorbaugruppe (4) und die Platinenbaugruppe (6) in der zweiten Innenkammer (90) untergebracht sind;
die elektrische Ölpumpe (10) einen Trennwandabschnitt (22) aufweist, der Trennwandabschnitt (22) zwischen dem ersten Gehäuse (1) und dritten Gehäuse (7) angeordnet ist, und die erste Innenkammer (80) und zweite Innenkammer (90) sich auf zwei Seiten des Trennwandabschnitts (22) befinden; und
die erste Innenkammer (80) von der zweiten Innenkammer (90) durch den Trennwandabschnitt (22) isoliert ist, oder die elektrische Ölpumpe (10) außerdem einen Dichtungsabschnitt (50) aufweist und die erste Innenkammer (80) von der zweiten Innenkammer (90) durch den Trennwandabschnitt (22) und den Dichtungsabschnitt (50) isoliert ist,
wobei die elektrische Ölpumpe (10) **dadurch gekennzeichnet ist, dass**
die elektrische Ölpumpe (10) darüber hinaus eine Trennplatte (9) aufweist, um zusätzlich die zweite Rotorbaugruppe (3) und die Statorbaugruppe (4) von der Platinenbaugruppe (6) zu isolieren, wobei die Trennplatte (9) in der zweiten Innenkammer (90) vorgesehen ist, die elektrische Ölpumpe (10) darüber hinaus einen zweiten Stützabschnitt (91) aufweist, der zweite Stützabschnitt (91) einstückig mit der Trennplatte (9) ausgebildet ist, der zweite Stützabschnitt (91) so angeordnet ist, dass er von der Trennplatte (9) zur zweiten Innenkammer (90) vorsteht, die elektrische Ölpumpe (10) ein zweites Lager (70) aufweist und die Pumpenwelle (5) auf dem zweiten Stützabschnitt (91) direkt abgestützt ist oder die Pumpenwelle (5) auf dem zweiten Stützabschnitt (91) durch das zweite Lager (70) abgestützt ist.

2. Elektrische Ölpumpe (10) nach Anspruch 1, wobei das zweite Gehäuse (2) mit dem ersten Gehäuse (1) lösbar verbunden ist, das zweite Gehäuse (2) näher an der zweiten Rotorbaugruppe (3) liegt als das erste Gehäuse (1), das zweite Gehäuse (2) den Trennwandabschnitt (22) umfasst und der Trennwandabschnitt (22) dafür ausgelegt ist, die erste Rotorbaugruppe (8) zu stützen.

3. Elektrische Ölpumpe (10) nach Anspruch 1, wobei das zweite Gehäuse (2) mit dem ersten Gehäuse (1) lösbar verbunden ist, das zweite Gehäuse (2) näher an der zweiten Rotorbaugruppe (3) liegt als das erste Gehäuse (1), der Trennwandabschnitt (22) mit dem ersten Gehäuse (1) und dem zweiten Gehäuse (2) lösbar verbunden ist, der Trennwandabschnitt (22) dafür ausgelegt ist, die erste Rotorbaugruppe (8) zu stützen, und der Trennwandabschnitt (22) näher an der zweiten Rotorbaugruppe (3) liegt als das zweite Gehäuse (2).

4. Elektrische Ölpumpe (10) nach Anspruch 1, darüber hinaus mit einem vierten Gehäuse (40a), wobei das vierte Gehäuse (40a) mit dem zweiten Gehäuse (2) lösbar verbunden ist, das vierte Gehäuse (40a) mit dem dritten Gehäuse (7) lösbar verbunden ist, das vierte Gehäuse (40a) den Trennwandabschnitt (22) aufweist und der Trennwandabschnitt (22) dafür ausgelegt ist, die erste Rotorbaugruppe (8) zu stützen.

5. Elektrische Ölpumpe (10) nach einem der Ansprüche 1 bis 4, wobei der Trennwandabschnitt (22) einen ersten Stützabschnitt (29) aufweist, der erste Stützabschnitt (29) so angeordnet ist, dass er von einem Hauptkörperabschnitt (221) des Trennwandabschnitts (22) zur zweiten Innenkammer (90) vorsteht, und die Pumpenwelle (5) direkt oder indirekt am ersten Stützabschnitt (29) abgestützt ist.

6. Elektrische Ölpumpe (10) nach Anspruch 5, wobei
der erste Stützabschnitt (29) einen ersten Aufnahmeabschnitt (290) aufweist, der erste Aufnahmeabschnitt (290) mit zumindest einem Teil eines ersten Aufnahmehohlraums gebildet ist, der erste Aufnahmehohlraum von zumindest einem Teil einer Innenumfangsfläche des ersten Aufnahmeabschnitts (290) umgeben ist, und
die Pumpenwelle (5) durch den ersten Aufnahmehohlraum verläuft und zumindest ein Teil einer Außenumfangsfläche der Pumpenwelle (5) sich in einer Spielpassung mit der Innenumfangsfläche des ersten Aufnahmeabschnitts (290) befindet; oder die elektrische Ölpumpe (10) ein erstes Lager (60) aufweist, das erste Lager (60) im ersten Aufnahmehohlraum vorgesehen ist, die Pumpenwelle (5) durch das erste Lager (60) verläuft und eine Außenumfangsfläche des ersten Lagers (60) sich in einer Presspassung mit der Innenumfangsfläche des ersten Aufnahmeabschnitts (290) befindet.

7. Elektrische Ölpumpe (10) nach Anspruch 6, wobei der erste Stützabschnitt (29) einen zweiten Aufnahmeabschnitt (296) aufweist, der zweite Aufnahmeabschnitt (296) mit zumindest einem Teil eines zweiten Aufnahmehohlraums gebildet ist, der zweite Aufnahmehohlraum von zumindest einem Teil einer Innenumfangsfläche des zweiten Aufnahmeabschnitts (296) umgeben ist, der Dichtungsabschnitt (50) eine Öldichtung aufweist, die Öldichtung im zweiten Aufnahmehohlraum vorgesehen ist, die Pumpenwelle (5) durch die Öldichtung verläuft und eine Außenumfangsfläche der Öldichtung am zweiten Aufnahmeabschnitt (296) abdichtend montiert ist.

8. Elektrische Ölpumpe (10) nach Anspruch 6, wobei der erste Stützabschnitt (29) einen zweiten Aufnahmeabschnitt (296) aufweist, zumindest ein Teil der Pumpenwelle (5) durch den zweiten Aufnahmeabschnitt (296) verläuft; und ein Zwischenraum zwischen der Innenumfangsfläche des zweiten Aufnahmeabschnitts (296) und zumindest einem Teil der Außenumfangsfläche der Pumpenwelle (5) gebildet ist, wobei der Zwischenraum kleiner als ein Eindringabstand eines Arbeitsmediums in der ersten Innenkammer (80) ist, und der Zwischenraum so ausgelegt ist, dass verhindert ist, dass das Arbeitsmedium in der ersten Innenkammer (80) durch den Zwischenraum in die zweite Innenkammer (90) eintritt.

9. Elektrische Ölpumpe (10) nach einem der Ansprüche 1 bis 8, wobei
die zweite Rotorbaugruppe (3) zwischen der ersten Rotorbaugruppe (8) und der Platinenbaugruppe (6) angeordnet ist; die erste Rotorbaugruppe (8) zu einem Ende der Pumpenwelle (5) hin angeordnet ist, die zweite Rotorbaugruppe (3) in der Nähe von einem anderen Ende der Pumpenwelle (5) angeordnet ist, die Platinenbaugruppe (6) nahe bei einem Ende der Pumpenwelle (5) liegt, das mit der zweiten Rotorbaugruppe (3) verbaut ist; und
ein Ende der Pumpenwelle (5), das nahe an der ersten Rotorbaugruppe (8) liegt, sich in die erste Innenkammer (80) erstreckt, und ein anderes Ende der Pumpenwelle (5) nahe an der zweiten Rotorbaugruppe (3) sich in die zweite Innenkammer (90) erstreckt.

10. Elektrische Ölpumpe (10) nach Anspruch 1, wobei
die Trennplatte (9) einen dritten Aufnahmeabschnitt (911) aufweist, der dritte Aufnahmeabschnitt (911) mit zumindest einem Teil eines dritten Aufnahmehohlraums gebildet ist, und der dritte Aufnahmehohlraum von zumindest einem Teil einer Innenumfangsfläche des dritten Aufnahmeabschnitts (911) umgeben ist, und
die Pumpenwelle (5) durch den dritten Aufnahmehohlraum verläuft und zumindest ein Teil der Außenumfangsfläche der Pumpenwelle (5) sich in einer Spielpassung mit einer Innenumfangsfläche des dritten Aufnahmeabschnitts (911) befindet; oder die elektrische Ölpumpe (10) ein zweites Lager (70) aufweist, das zweite Lager (70) im dritten Aufnahmehohlraum vorgesehen ist, die Pumpenwelle (5) durch das zweite Lager (70) verläuft und eine Außenumfangsfläche des zweiten Lagers (70) sich in einer Presspassung mit der Innenumfangsfläche des dritten Aufnahmeabschnitts (911) befindet.

11. Elektrische Ölpumpe (10) nach einem der Ansprüche 1 bis 10, wobei das erste Gehäuse (1) mit dem zweiten Gehäuse (2) durch einen ersten Verbindungsabschnitt lösbar verbunden ist, das zweite Gehäuse (2) mit dem dritten Gehäuse (7) durch einen zweiten Verbindungsabschnitt lösbar verbunden ist und der erste Verbindungsabschnitt und zweite Verbindungsabschnitt nicht in der ersten Innenkammer (80) oder zweiten Innenkammer (90) angeordnet sind.

12. Elektrische Ölpumpe (10) nach Anspruch 11, wobei der erste Verbindungsabschnitt erste Schrauben (1231) aufweist, das erste Gehäuse (1) einen ersten Flanschabschnitt (15) aufweist, der erste Flanschabschnitt (15) so angeordnet ist, dass er vom ersten Gehäuse (1) vorsteht, der erste Flanschabschnitt (15) mit ersten Verbindungslöchern (13) gebildet ist, das zweite Gehäuse (2) mit ersten Gewindeöffnungen (231) gebildet ist, die ersten Gewindeöffnungen (231) entlang eines Hauptkörperabschnitts (21) des zweiten Gehäuses (2) gebildet sind, die ersten Schrauben (1231) durch die ersten Verbindungslöcher (13) verlaufen und ausgehend von einer Seite nahe am ersten Gehäuse (1) montiert sind, und die ersten Schrauben (1231) mit dem zweiten Gehäuse (2) verschraubt sind.

13. Elektrische Ölpumpe (10) nach einem der Ansprüche 1 bis 12, wobei die elektrische Ölpumpe (10) einen äußeren Dichtungsabschnitt (50) aufweist, der äußere Dichtungsabschnitt (50) einen ersten Dichtring (30) und einen zweiten Dichtring (32) aufweist, die auf eine Außenumfangsfläche des zweiten Gehäuses (2) aufgeschoben sind, der erste Dichtring (30) nahe am ersten Gehäuse (1) angeordnet ist und der zweite Dichtring (32) nahe am dritten Gehäuse (7) angeordnet ist.

14. Elektrische Ölpumpe (10) nach Anspruch 13, wobei
die erste Rotorbaugruppe (8) einen ersten Rotor (81) und einen zweiten Rotor (82) aufweist, eine Hydraulikkammer (801) mit einem variablen Volumen zwischen dem ersten Rotor (81) und zweiten Rotor (82) gebildet ist, die elektrische Ölpumpe (10) darüber hinaus einen ersten Strömungsanschluss (11) und einen zweiten Strömungsanschluss (12) aufweist, das Arbeitsmedium durch den ersten Strömungsanschluss (11) in die elektrische Ölpumpe (10) hineinströmt, und das Arbeitsmedium durch den zweiten Strömungsanschluss (12) aus der elektrischen Ölpumpe (10) herausströmt; und
die elektrische Ölpumpe (10) darüber hinaus einen ersten Verbindungshohlraum (112) und einen zweiten Verbindungshohlraum (121) aufweist, der erste Verbindungshohlraum (112) zwischen dem ersten Strömungsanschluss (11) und der Hydraulikkammer (801) angeordnet ist, der erste Verbindungshohlraum (112) mit dem ersten Strömungsanschluss (11) in Verbindung steht, der zweite Verbindungshohlraum (121) zwischen dem zweiten Strömungsanschluss (12) und der Hydraulikkammer (801) angeordnet ist, und der zweite Verbindungshohlraum (121) mit dem zweiten Strömungsanschluss (12) in Verbindung steht.

## Revendications

1. Pompe à huile électrique (10), comprenant : un carter de pompe, un premier ensemble rotor (8), un arbre de pompe (5), un deuxième ensemble rotor (3), un ensemble stator (4) et un ensemble carte de circuit (6), sachant que
le carter de pompe comprend au moins un premier carter (1), un deuxième carter (2) et un troisième carter (7), la pompe à huile électrique (10) présente une chambre intérieure de pompe, la chambre intérieure de pompe comprend une première chambre intérieure (80) et une deuxième chambre intérieure (90), une paroi latérale formant la première chambre intérieure (80) comprend une part du premier carter (1) et une part du deuxième carter (2), une paroi latérale formant la deuxième chambre intérieure (90) comprend une part du troisième carter (7), et le troisième carter (7) est configuré pour protéger l'ensemble carte de circuit (6) ;
le premier ensemble rotor (8) est logé dans la première chambre intérieure (80), et le deuxième ensemble rotor (3), l'ensemble stator (4) et l'ensemble carte de circuit (6) sont logés dans la deuxième chambre intérieure (90) ;
la pompe à huile électrique (10) comprend une partie de séparation (22), la partie de séparation (22) est agencée entre le premier carter (1) et le troisième carter (7), et la première chambre intérieure (80) et la deuxième chambre intérieure (90) sont situées de deux côtés de la partie de séparation (22) ; et
la première chambre intérieure (80) est isolée de la deuxième chambre intérieure (90) par la partie de séparation (22), ou la pompe à huile électrique (10) comprend en outre une partie d'étanchéité (50), et la première chambre intérieure (80) est isolée de la deuxième chambre intérieure (90) par la partie de séparation (22) et la partie d'étanchéité (50),
la pompe à huile électrique (10) est **caractérisée en ce que**
la pompe à huile électrique (10) comprend en outre une plaque de séparation (9) pour isoler en outre le deuxième ensemble rotor (3) et l'ensemble stator (4) de l'ensemble carte de circuit (6), sachant que la plaque de séparation (9) est disposée dans la deuxième chambre intérieure (90), la pompe à huile électrique (10) comprend en outre une deuxième partie de support (91), la deuxième partie de support (91) est formée d'une seule pièce avec la plaque de séparation (9), la deuxième partie de support (91) est agencée en dépassant de la plaque de séparation (9) vers la deuxième chambre intérieure (90), la pompe à huile électrique (10) comprend un deuxième palier (70), et l'arbre de pompe (5) est supporté directement sur la deuxième partie de support (91), ou l'arbre de pompe (5) est supportée sur la deuxième partie de support (91) via le deuxième palier (70).

2. La pompe à huile électrique (10) selon la revendication 1, sachant que le deuxième carter (2) est raccordé de manière détachable au premier carter (1), le deuxième carter (2) est plus proche du deuxième ensemble rotor (3) que le premier carter (1), le deuxième carter (2) comprend la partie de séparation (22), et la partie de séparation (22) est configurée pour supporter le premier ensemble rotor (8).

3. La pompe à huile électrique (10) selon la revendication 1, sachant que le deuxième carter (2) est raccordé de manière détachable au premier carter (1), le deuxième carter (2) est plus proche du deuxième ensemble rotor (3) que le premier carter (1), la partie de séparation (22) est raccordée de manière détachable au premier carter (1) et au deuxième carter (2), la partie de séparation (22) est configurée pour supporter le premier ensemble rotor (8), et la partie de séparation (22) est plus proche du deuxième ensemble rotor (3) que le deuxième carter (2).

4. La pompe à huile électrique (10) selon la revendication 1, comprenant en outre un quatrième carter (40a), sachant que le quatrième carter (40a) est raccordé de manière détachable au deuxième carter (2), le quatrième carter (40a) est raccordé de manière détachable au troisième carter (7), le quatrième carter (40a) comprend la partie de séparation (22), et la partie de séparation (22) est configurée pour supporter le premier ensemble rotor (8).

5. La pompe à huile électrique (10) selon l'une quelconque des revendications 1 à 4, sachant que la partie de séparation (22) comprend une première partie de support (29), la première partie de support (29) est agencée en dépassant d'une partie corps principal (221) de la partie de séparation (22) vers la deuxième chambre intérieure (90), et l'arbre de pompe (5) est supporté directement ou indirectement sur la première partie de support (29).

6. La pompe à huile électrique (10) selon la revendication 5, sachant que
la première partie de support (29) comprend une première partie de logement (290), la première partie de logement (290) est formée avec au moins une part d'une première cavité de logement, la première cavité de logement est entourée par au moins une part d'une surface circonférentielle intérieure de la première partie de logement (290), et
l'arbre de pompe (5) passe à travers la première cavité de logement, et au moins une part d'une surface circonférentielle extérieure de l'arbre de pompe (5) est en ajustement avec jeu avec la surface circonférentielle intérieure de la première partie de logement (290) ; ou la pompe à huile électrique (10) comprend un premier palier (60), le premier palier (60) est disposé dans la première cavité de logement, l'arbre de pompe (5) passe à travers le premier palier (60), et une surface circonférentielle extérieure du premier palier (60) est en ajustement serré avec la surface circonférentielle intérieure de la première partie de logement (290).

7. La pompe à huile électrique (10) selon la revendication 6, sachant que la première partie de support (29) comprend une deuxième partie de logement (296), la deuxième partie de logement (296) est formée avec au moins une part d'une deuxième cavité de logement, la deuxième cavité de logement est entourée par au moins une part d'une surface circonférentielle intérieure de la deuxième partie de logement (296), la partie d'étanchéité (50) comprend un joint d'étanchéité à l'huile, le joint d'étanchéité à l'huile est disposé dans la deuxième cavité de logement, l'arbre de pompe (5) passe à travers le joint d'étanchéité à l'huile, et une surface circonférentielle extérieure du joint d'étanchéité à l'huile est ajusté de manière étanche sur la deuxième partie de logement (296).

8. La pompe à huile électrique (10) selon la revendication 6, sachant que la première partie de support (29) comprend une deuxième partie de logement (296), au mois une part de l'arbre de pompe (5) passe à travers la deuxième partie de logement (296) ; et un jeu est formé entre la surface circonférentielle intérieure de la deuxième partie de logement (296) et au moins une part de la surface circonférentielle extérieure de l'arbre de pompe (5), le jeu est plus petit qu'une distance de pénétration d'un fluide de travail dans la première chambre intérieure (80), et le jeu est configuré pour empêcher le fluide de travail dans la première chambre intérieure (80) d'entrer dans la deuxième chambre intérieure (90) à travers le jeu.

9. La pompe à huile électrique (10) selon l'une quelconque des revendications 1 à 8, sachant que
le deuxième ensemble rotor (3) est agencé entre le premier ensemble rotor (8) et l'ensemble carte de circuit (6) ; le premier ensemble rotor (8) est agencé vers une extrémité de l'arbre de pompe (5), le deuxième ensemble rotor (3) est agencé près d'une autre extrémité de l'arbre de pompe (5), l'ensemble carte de circuit (6) est proche d'une extrémité de l'arbre de pompe (5) montée avec le deuxième ensemble rotor (3) ; et
une extrémité de l'arbre de pompe (5) proche du premier ensemble rotor (8) s'étend dans la première chambre intérieure (80), et une autre extrémité de l'arbre de pompe (5) proche du deuxième ensemble rotor (3) s'étend dans la deuxième chambre intérieure (90).

10. La pompe à huile électrique (10) selon la revendication 1, sachant que
la plaque de séparation (9) comprend une troisième partie de logement (911), la troisième partie de logement (911) est formée avec au moins une part d'une troisième cavité de logement, et la troisième cavité de logement est entourée par au moins une part d'une surface circonférentielle intérieure de la troisième partie de logement (911), et
l'arbre de pompe (5) passe à travers la troisième cavité de logement, et au moins une part de la surface circonférentielle extérieure de l'arbre de pompe (5) est en ajustement avec jeu avec une surface circonférentielle intérieure de la troisième partie de logement (911) ; ou la pompe à huile électrique (10) comprend un deuxième palier (70), le deuxième palier (70) est disposé dans la troisième cavité de logement, l'arbre de pompe (5) passe à travers le deuxième palier (70), et une surface circonférentielle extérieure du deuxième palier (70) est en ajustement serré avec la surface circonférentielle intérieure de la troisième partie de logement (911).

11. La pompe à huile électrique (10) selon l'une quelconque des revendications 1 à 10, sachant que le premier carter (1) est raccordé de manière détachable au deuxième carter (2) via une première partie de raccordement, le deuxième carter (2) est raccordé de manière détachable au troisième carter (7) via une deuxième partie de raccordement, et la première partie de raccordement et la deuxième partie de raccordement ne sont pas agencées dans la première chambre intérieure (80) ou la deuxième chambre intérieure (90).

12. La pompe à huile électrique (10) selon la revendication 11, sachant que la première partie de raccordement comprend des premières vis (1231), le premier carter (1) comprend une première partie bride (15), la première partie bride (15) est agencée en dépassant du premier carter (1), la première partie bride (15) est formée avec des premiers trous de communication (13), le deuxième carter (2) est formé avec des premiers trous taraudés (231), les premiers trous taraudés (231) sont formés le long d'une partie corps principal (21) du deuxième carter (2), les premières vis (1231) passent à travers les premiers trous de communication (13) et sont montées depuis un côté proche du premier carter (1), et les premières vis (1231) sont vissées au deuxième carter (2).

13. La pompe à huile électrique (10) selon l'une quelconque des revendications 1 à 12, sachant que la pompe à huile électrique (10) comprend une partie d'étanchéité extérieure (50), la partie d'étanchéité extérieure (50) comprend une première bague d'étanchéité (30) et une deuxième bague d'étanchéité (32) qui sont emmanchées sur une surface circonférentielle extérieure du deuxième carter (2), la première bague d'étanchéité (30) est agencée près du premier carter (1), et la deuxième bague d'étanchéité (32) est agencée près du troisième carter (7).

14. La pompe à huile électrique (10) selon la revendication 13, sachant que
le premier ensemble rotor (8) comprend un premier rotor (81) et un deuxième rotor (82), une chambre hydraulique (801) avec un volume variable est formée entre le premier rotor (81) et le deuxième rotor (82), la pompe à huile électrique (10) comprend en outre un premier orifice d'écoulement (11) et un deuxième orifice d'écoulement (12), le fluide de travail s'écoule dans la pompe à huile électrique (10) via le premier orifice d'écoulement (11), et le fluide de travail s'écoule hors de la pompe à huile électrique (10) via le deuxième orifice d'écoulement (12) ; et
la pompe à huile électrique (10) comprend en outre une première cavité de communication (112) et une deuxième cavité de communication (121), la première cavité de communication (112) est agencée entre le premier orifice d'écoulement (11) et la chambre hydraulique (801), la première cavité de communication (112) est en communication avec le premier orifice d'écoulement (11), la deuxième cavité de communication (121) est agencée entre le deuxième orifice d'écoulement (12) et la chambre hydraulique (801), et la deuxième cavité de communication (121) est en communication avec le deuxième orifice d'écoulement (12).
